# EUROPÄISCHE PATENTSCHRIFT

(11) **EP 2 080 888 B1**
(45) Veröffentlichungstag und Bekanntmachung des Hinweises auf die Patenterteilung: **29.05.2013**
(21) Anmeldenummer: 08020683.2
(22) Anmeldetag: 28.11.2008
(51) Int. Cl.: F02D 41/38, F02D 41/14, F02D 19/08, F02M 63/02

(54) **Automatische Kraftstofferkennung**
Automatic fuel detection
Reconnaissance automatique de carburant

(30) Priorität: 19.01.2008 DE 102008005183
(43) Veröffentlichungstag der Anmeldung: 22.07.2009
(73) Patentinhaber: DEUTZ Aktiengesellschaft, 51149 Köln (DE)
(72) Erfinder: Zimmermann, Mark, 53332 Bornheim (DE); Vömel, Dominic, 42653 Solingen (DE)

(56) Entgegenhaltungen:
- EP-A1- 1 790 844
- WO-A1-2006/117287
- WO-A1-2008/007128
- DE-A1- 10 158 950
- DE-A1- 10 257 655

## Beschreibung

Die Erfindung betrifft ein Verfahren zum Betreiben einer Brennkraftmaschine, die wechselweise und/oder additiv mit einem dünnflüssigen Kraftstoff, insbesondere Diesel, und einem dickflüssigen Kraftstoff, insbesondere Rapsöl, betrieben wird, wobei die beiden Kraftstoffe von einer gemeinsamen Hochdruckpumpeneinrichtung in einen Speicher gefördert werden und aus diesem über Einspritzventile in Arbeitsräume der Brennkraftmaschine eingebracht werden, wobei die Steuerung der Brennkraftmaschine und der Einspritzeinrichtung von einer elektronischen Steuereinrichtung erfolgt.

Eine derartige Brennkraftmaschine ist aus EP 1 790 844 A1 und der nicht vorveröffentlichten DE 10 2007 031781 A1 bekannt. Diese Brennkraftmaschine betrifft eine Vorrichtung zum alternativen Betreiben einer Dieselbrennkraftmaschine mit dünnflüssigem Kraftstoff, insbesondere Dieselöl, und dickflüssigem Kraftstoff, insbesondere Rapsöl, wobei beide Kraftstoffe über ein Common-Rail-System der Brennkraftmaschine zugeführt werden. Dabei ist eine Umschaltvorrichtung vorgesehen, die einerseits ein wahlweises Zuführen eines der beiden Kraftstoffe zu dem Common-Rail-System ermöglicht und mit der auch eine Spülung des Niederdrucksystems des Kraftstoffsystems erfolgt.

Der Erfindung liegt die Aufgabe zugrunde, ein Verfahren zum Betreiben einer Brennkraftmaschine mit unterschiedlichem Kraftstoff anzugeben, wobei die Erkennung des jeweiligen Kraftstoffs beziehungsweise Kraftstoffgemischs und eine daraus hergeleitete Steuerung der Brennkraftmaschine automatisch erfolgen soll.

Grundlage der Erfindung ist das Bestreben, eine insbesondere selbstzündende Brennkraftmaschine unter bestimmten Gegebenheiten, insbesondere beim Einsatz im landwirtschaftlichen, kommunalen oder Flughafenbetrieb, mit aus pflanzlichen Produkten gewonnenem Kraftstoff, insbesondere Rapsöl, zu betreiben. Dieser Kraftstoff ist gegenüber einem aus Erdöl gewonnenem Kraftstoff, insbesondere Diesel, beispielsweise wesentlich dickflüssiger und nicht geeignet, unter allen Betriebsbedingungen und Umgebungsbedingungen über ein modernes Einspritzsystem wie einem Common-Rail-System der Brennkraftmaschine als Betriebsstoff zuzuführen. Weiterhin sind die Heizwerte der Kraftstoffe unterschiedlich, so dass diesbezüglich eine Anpassung der Steuerung der Brennkraftmaschine sinnvoll ist.

Es besteht die Möglichkeit, die Eigenschaften des Kraftstoffs über einen oder mehrere Sensoren, die in dem Kraftstoffsystem eingesetzt sind, zu erfassen und auszuwerten. Solche Sensoren sind aufwendig und bei einer Fehlfunktion oder einem Ausfall ist die Brennkraftmaschine schlimmstenfalls nicht mehr einsatzbereit.

Die unterschiedlichen Eigenschaften der Kraftstoffe werden daher erfindungsgemäß ohne weitere Hilfsmittel auf elektronischem Wege ausgewertet. Aus dieser Auswertung wird das in dem Kraftstoffsystem, insbesondere in dem Speicher, befindliche Kraftstoffgemisch oder der Einzelkraftstoff bestimmt und dem entsprechend kann die Steuerung der Brennkraftmaschine angepasst werden.

So ist es beispielsweise notwendig, den dickflüssigen Kraftstoff auf eine Temperatur von ca. 55 °C bis 75 °C, bevorzugt auf 65 °C, aufzuheizen, damit dieser problemlos den Brennräumen der Brennkraftmaschine zuführbar ist. Durch die erfindungsgemäße Kraftstoffermittlung kann diese Kenntnis zur Steuerung der Aufheizung direkt herangezogen werden und es kann bei reinem Dieselbetrieb auf eine Aufheizung verzichtet werden. Weiterhin kann während des insbesondere Leerlaufbetriebs und eines Niedriglastbetriebs ein vermeidbares Hin- und Herschalten zwischen den Kraftstoffen ausgeschlossen werden. Hierzu ist anzumerken, dass ein Betrieb mit dickflüssigem Kraftstoff erst ab Teillast erfolgen sollte, da dann die Bildung von Ablagerungen im Einspritzsystem sicher vermieden wird. Darüber hinaus ist es so, dass die unterschiedlichen Kraftstoffe verschiedene Heizwerte aufweisen, so dass, je nachdem, welcher Kraftstoff zum Betreiben der Brennkraftmaschine verwendet wird, bei gleichen Kraftstoffeinspritzmengen unterschiedliche Leistungen der Brennkraftmaschine erreicht werden. Da der Heizwert von Diesel höher ist, kann beziehungsweise muss beim Betrieb mit Rapsöl zum Erreichen einer gleichen Leistung eine größere Kraftstoffmenge eingespritzt werden. Bei mechanischen Umschaltsystemen zwischen den verschiedenen Kraftstoffen besteht die Gefahr, dass, bewusst oder unbewusst, bei Betrieb der Brennkraftmaschine mit Diesel eine zu hohe Einspritzmenge eingestellt wird, so dass die Brennkraftmaschine dauerhaft im Bereich von Überlast betrieben wird. Dies kann durch die erfindungsgemäße Bestimmung des Kraftstoffs und Auswertung zur Anpassung der Einspritzmenge ausgeschlossen werden.

Dadurch ist insgesamt die Gefahr von gewollten oder ungewollten Manipulationen bei der Kraftstoffsteuerung beziehungsweise der Brennkraftmaschinensteuerung ausgeschlossen und eine Beeinträchtigung des Betriebs der Brennkraftmaschine durch fehlerhafte oder defekte Sensoren ausgeschaltet.

Die Auswertung erfolgt während einer Phase eines stationären Betriebs der Brennkraftmaschine. Die Kraftstofferkennung wird über die Regelbestandteile eines PID-Reglers errechnet und bestimmt. Hierbei ist vorauszuschicken, dass die Einstellung der dem Speicher des Einspritzsystems zuzuführenden Kraftstoffmenge von einem PID-Regler, der von der elektronischen Steuereinrichtung, die auch weitere Funktionen der Brennkraftmaschine steuert, bestimmt wird. Grundsätzlich geschieht dies derart, dass der P-Teil des Reglers zunächst grob die dem Speicher zuzuführende (bei beiden Kraftstoffen gleiche) Kraftstoffmenge bestimmt, wobei dann der I-Teil (integraler Anteil) des Reglers die genaue Einregelung auf einen vorgegebenen Speicher-Solldruck durchführt. Dabei wird der aktuelle Speicherdruck über einen Drucksensor gemessen und der Steuereinrichtung zugeführt. Im Falle der Zuführung von Rapsöl in den Speicher arbeiten die Hochdruckpumpen infolge der höheren Viskosität mit einem gegenüber dem Dieselbetrieb höheren Wirkungsgrad. Dadurch misst das in der Regeleinrichtung abgelegte Vorsteuerkennfeld den Pumpen im Rapsölbetrieb über eine elektrisch angesteuerte Kraftstoffzumesseinrichtung eine zu große Rapsölmenge zu, so dass der Speicherdruck über den Speicher-Solldruck ansteigt. Dieser erhöhte Istdruck wird dann durch den I-Teil des Reglers auf den Solldruck eingeregelt. Wird nun die Brennkraftmaschine während einer Phase eines stationären Betriebs bei einer bekannten Drehzahl betrieben, regelt der PID-Regler entsprechend den vorherigen Ausführungen nach einer kurzen Zeitspanne den tatsächlichen Kraftstoffdruck in dem Speicher auf den in der Steuereinrichtung abgelegten Solldruck ein. Aufgrund der vorherigen Ausführungen ergeben sich dabei je nach Kraftstoff oder Kraftstoffgemisch unterschiedliche I-Werte. Diese unterschiedlichen I-Werte werden mit in einem Kennfeld der Steuereinrichtung abgelegten Werten verglichen und daraus ermittelt, welcher Kraftstoff oder welches Kraftstoffgemisch sich in dem Speicher befindet. Diese Kenntnis kann dann beispielsweise für die zuvor beschriebene Leistungsanpassung der Brennkraftmaschine herangezogen werden.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig. 1: eine Darstellung der Einspritzvorrichtung ohne die Niederdruckstufe,
- Fig. 2: ein Kennfeld mit der kinematischen Viskosität von Rapsöl-Diesel-kraftstoff-Mischungen in Abhängigkeit der Temperatur und
- Fig. 3: Änderung des Speicherdrucks über der Zeit.

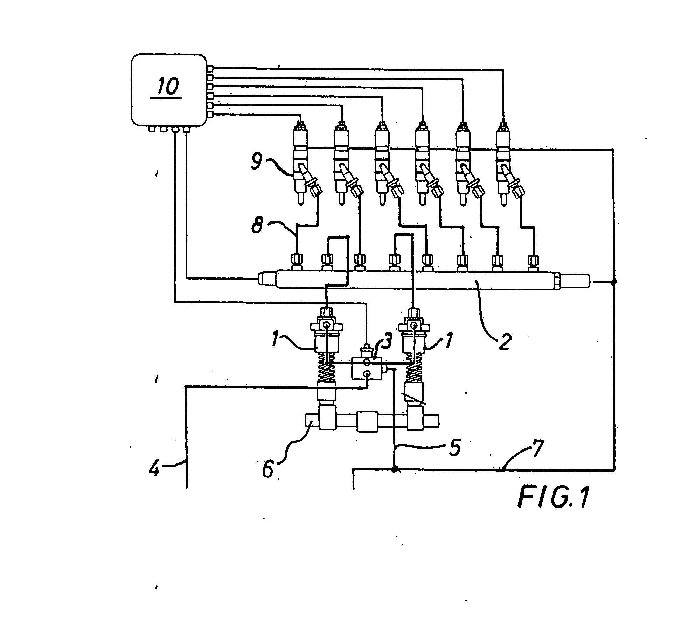

Fig. 1 zeigt ein Einspritzsystem einer selbstzündenden Brennkraftmaschine, bei dem von zwei bevorzugt in ein Kurbelgehäuse der Brennkraftmaschine eingebauten Hochdruckpumpen 1 Kraftstoff in einen Speicher 2 gefördert wird. Der Speicher 2 ist das "Rail" einer sogenannten "Common-Rail-Einspritzvorrichtung". Die in den Speicher 2 geförderte Kraftstoffmenge wird eingangsseitig der Hochdruckpumpen 1 von einer Kraftstoffzumesseinrichtung 3 bestimmt, die über eine Zuführleitung 4 mit Kraftstoff beschickt wird. Mit der Kraftstoffzumesseinrichtung 3 wird die den Arbeitsräumen der Hochdruckpumpen 1 zugeführte Kraftstoffmenge bestimmt und eine gegebenenfalls überflüssige Kraftstoffmenge über eine Absteuerleitung 5 abgesteuert. Die Hochdruckpumpen 1 werden im Übrigen von Nocken betätigt, die auf einer Gaswechselnockenwelle 6 zusätzlich zu den Gaswechselnocken angeordnet sind. Der über die Zuführleitung 4 der Kraftstoffzumesseinrichtung zugeführte Kraftstoff ist ein dünnflüssiger Kraftstoff, insbesondere Diesel, oder ein dickflüssiger Kraftstoff, insbesondere Rapsöl, oder ein Gemisch von beiden Kraftstoffen. Durch eine geeignete Umschaltvorrichtung kann zwischen den beiden Kraftstoffen umgeschaltet werden, so dass ein wechselweiser oder additiver Betrieb mit den beiden Kraftstoffen möglich ist. Dabei beinhaltet die Umschaltvorrichtung auch eine geeignete Schaltvorrichtung, mit der über die Absteuerleitung 5 abgesteuerter Kraftstoff oder in diese über eine Leckageleitung 7 eingeführter Kraftstoff wahlweise in einen Tank für dünnflüssigen Kraftstoff oder dickflüssigen Kraftstoff geleitet wird.

Der Speicher 2 ist über eine Anzahl Hochdruckleitungen 8 mit Einspritzventilen 9 verschaltet, über die Kraftstoff in die einzelnen Brennräume der Brennkraftmaschine eingespritzt wird. Die Einspritzventile 9 weisen einen Leckageanschluss auf, der mit der Leckageleitung 7 verschaltet ist. Gleichzeitig ist die Leckageleitung 7 mit einem Überdruckanschluss des Speichers 2 verbunden. Gesteuert wird die Einspritzeinrichtung von einer Steuereinrichtung 10, die bevorzugt die gesamte Brennkraftmaschinensteuerung vornimmt. In der elektronischen Steuereinrichtung 10 sind Kennfelder abgelegt, anhand denen in Abhängigkeit von beispielsweise Bedieneinrichtungen durch Ansteuerung der Einspritzventile Kraftstoff in die Brennräume der Brennkraftmaschine eingespritzt wird. Entsprechend dem aus dem Speicher 2 entnommenen Kraftstoff wird durch die Kraftstoffzumesseinrichtung 3, die ebenfalls von der Steuereinrichtung 10 angesteuert wird, eine entsprechende Kraftstoffmenge den Hochdruckpumpen 1 zugeführt, die diesen in den Speicher fördern. Dabei wird der Druck in dem Speicher 2 durch einen Drucksensor ermittelt und ebenfalls in der Steuereinrichtung 10 ausgewertet. Hierbei ist zu berücksichtigen, dass der Druck in dem Speicher 2 drehzahlabhängig verändert wird, wobei der Druck bei steigender Drehzahl auf höhere Druckwerte eingestellt wird.

Die entsprechende Ansteuerung der Kraftstoffzumesseinrichtung 3 erfolgt durch einen in die Steuereinrichtung integrierten PID-Regler.

Dies geschieht in einem stationären Zustand der Brennkraftmaschine folgendermaßen:

Im stationären Zustand der Brennkraftmaschine, also bei konstanter Last und Drehzahl, entnimmt die Steuereinrichtung 10 dem Speicher 2 entsprechend einem Kennfeld eine bestimmte Kraftstoffmenge zur Einspritzung in die Brennräume, die in den Speicher 2 wieder nachgefüllt werden muss. Diese Nachfüllung erfolgt druckgesteuert, das heißt, es wird der in dem Speicher herrschende Druck zur Steuerung herangezogen. Entsprechend wird der P-Teil des PID-Reglers zunächst einen proportionalen Anteil zur Nachfüllung des Speichers 2 einstellen, der dann von dem I-Anteil auf einen vorgegebenen Soll-Speicherdruck berichtigt bzw. nachgeregelt wird. Für einen genau definierten Betriebspunkt ergibt sich somit für beispielsweise einen Betrieb mit 100 % des dünnflüssigen Kraftstoffs ein ganz bestimmter Wert des I-Anteils, der in einem Kennfeld der Steuereinrichtung abgelegt ist. (Diese Bestimmung kann bei Prüfstandläufen erfolgt sein.)

Wird nun der Kraftstoffzumesseinrichtung stattdessen zu 100 % der dickflüssige Kraftstoff zugeführt, erhöht sich aufgrund der geringeren Leckage der Wirkungsgrad der Hochdruckpumpen 1 und entsprechend dem eingestellten P-Anteil steigt der Druck in dem Speicher 2 auf einen höheren Wert als im zuvor geschilderten Fall. Dem entsprechend erfolgt die Einregelung auf den Soll-Speicherdruck mit einem zu dem ersten Fall unterschiedlichen Wert des I-Anteils. Dieser unterschiedliche Wert des I-Anteils wird mit entsprechenden in der Steuereinrichtung 10 abgelegten Kennwerten verglichen und aus dem Vergleich kann genau bestimmt werden, welcher Kraftstoff oder welches Kraftstoffgemisch über die Zuführleitung der Kraftstoffzumesseinrichtung zugeführt wird.

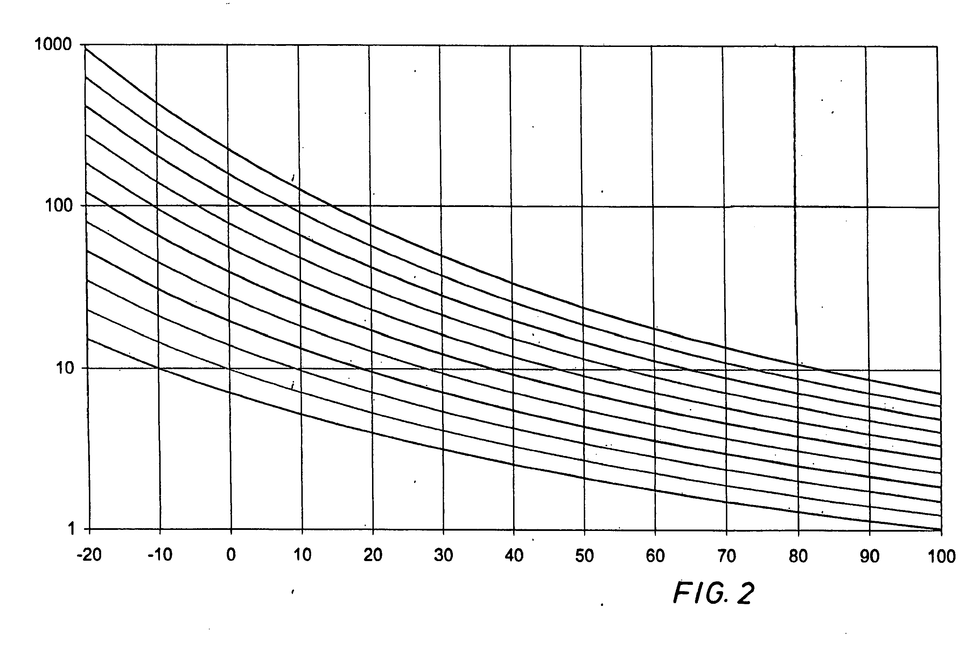

In Fig. 2 ist die Änderung der kinematischen Viskosität von Rapsöl-Dieselkraftstoff-Mischungen bei verschiedenen Temperaturen dargestellt. Dabei bestimmt die unterste Kennlinie, die bei einer Temperatur von 100 °C eine kinematische Viskosität von 1 mm²/sec. aufweist, einen Anteil von 100 % Dieselkraftstoff. Die darüber liegenden Kennlinien bestimmen jeweils ein Rapsöl-Dieselkraftstoff-Gemisch, bei denen in 10 %-Schritten eine Verringerung des Dieselkraftstoffanteils erfolgt. Die oberste Kennlinie bestimmt also einen 100 % -Anteil von Rapsöl.

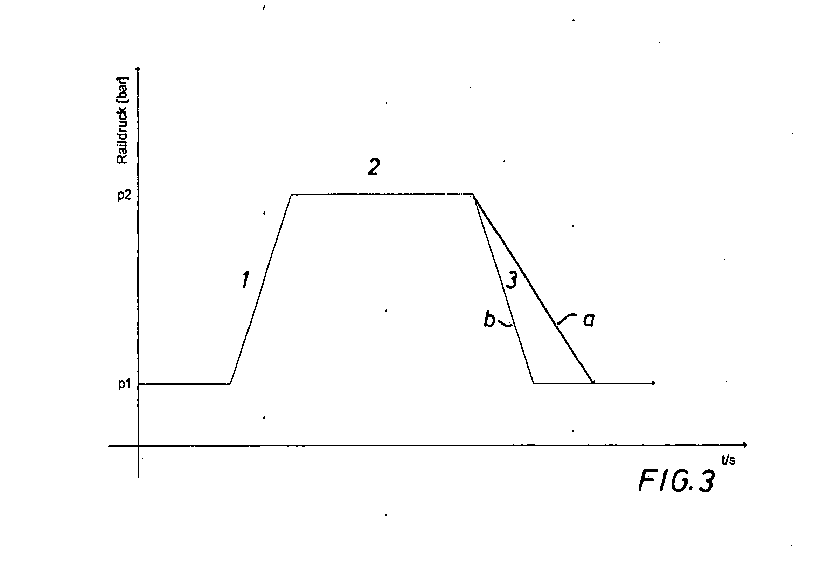

Physikalische Einflussgrößen sind die Kompressibilität (kann für beide Kraftstoffe in betrachtetem Druckbereich jeweils als konstant angesehen werden), der Volumenausdehnungskoeffizient (hier wirkt sich eine Temperaturänderung aus), die Änderung der Dichte (ist eine Funktion der Temperatur) und die Änderung der Viskosität (ist ebenfalls eine Funktion der Temperatur). Die kinematische Viskosität, auf die in Figur 3 Bezug genommen wird, ist der Quotient aus dynamischer Viskosität und Dichte. Da folglich die Eingangsgrößen temperaturabhängig sind, ist auch die kinematische Viskosität temperaturabhängig. Die Kraftstofferkennung sollte nur bei bestimmten Kraftstofftemperaturen des Rapsöls erfolgen, da die Viskosität des Rapsöls deutlich stärker von der Temperatur abhängt, als dies bei Dieselkraftstoff der Fall ist. Dagegen hat der unterschiedliche Kraftstoffniederdruck der jeweiligen Kraftstoffe keinen allzu großen Einfluss auf die Kraftstofferkennung.

In Fig. 3 sind die drei denkbaren Phasen von Änderungen des Rail-Drucks aufgetragen über der Zeit dargestellt. Ausgehend von einem Druck p1 ist in einer Phase 1 eine Druckerhöhung des Rail-Drucks auf einen Wert p2 dargestellt. Diese Phase stellt sich beispielsweise bei einer Leistungserhöhung von Teillast nach Volllast ein. Während dieser Phase ist keine Kraftstofferkennung möglich. Die Phase 2 bestimmt einen stationären Betrieb der Brennkraftmaschine, in dem der Rail-Druck über eine bestimmte Zeitspanne konstant bleibt. In dieser Phase ist die Kraftstofferkennung möglich. Die Phase 3 definiert eine Reduzierung des Rail-Drucks von einem Druck p2 auf einen Druck p1.

### Bezugszeichen

- 1: Hochdruckpumpe
- 2: Speicher
- 3: Kraftstoffzumesseinrichtung
- 4: Zuführleitung
- 5: Absteuerleitung
- 6: Gaswechselnockenwelle
- 7: Leckageleitung
- 8: Hochdruckleitung
- 9: Einspritzventil
- 10: Steuereinrichtung

## Patentansprüche

1. Verfahren zum Betreiben einer Brennkraftmaschine, die wechselweise und/oder additiv mit einem dünnflüssigen Kraftstoff und einem dickflüssigen Kraftstoff betrieben wird, wobei die beiden Kraftstoffe von einer gemeinsamen Hochdruckpumpeneinrichtung (1) in einen Speicher (2) gefördert werden und aus diesem über Einspritzventile (9) in Arbeitsräume der Brennkraftmaschine eingebracht werden, wobei die Steuerung der Brennkraftmaschine und der Einspritzeinrichtung von einer elektronischen Steuereinrichtung (10) erfolgt, wobei die dem Speicher (2) zugeführte Kraftstoffmenge über einen PID-Regler gesteuert wird und wobei unter Einsatz der elektronischen Steuereinrichtung unterschiedliche Eigenschaften der Kraftstoffe ausgewertet werden, daraus der in dem Speicher (2) befindliche Kraftstoff und/oder das in dem Speicher (2) befindliche Kraftstoffgemisch bestimmt wird und dementsprechend die Steuerung der Brennkraftmaschine angepasst wird, **dadurch gekennzeichnet,**
- **dass** die Auswertung während einer Phase eines stationären Betriebs der Brennkraftmaschine erfolgt und
- **dass** eine Kraftstofferkennung aus dem sich unterschiedlich einstellenden 1-Regelanteil hergeleitet wird, indem der I-Regelanteil mit entsprechenden in der Steuereinrichtung (10) abgelegten Kennwerten verglichen wird.

2. Verfahren nach Anspruch 1,
**dadurch gekennzeichnet, dass** die Viskositäten der Kraftstoffe ausgewertet werden.

## Claims

1. Method for operating an internal combustion engine which is alternately and/or additively operated with a low-viscosity fuel and a high-viscosity fuel, wherein the two fuels are delivered by a common high pressure pump device (1) into an accumulator (2) and are fed therefrom via injection valves (9) into working spaces of the internal combustion engine, wherein the internal combustion engine and the injection device are controlled by an electronic control device (10), wherein the quantity of fuel fed to the accumulator (2) is controlled by means of a PID controller, wherein different properties of the fuels are evaluated using the electronic control device and the fuel located in the accumulator (2) and/or the fuel mixture located in the accumulator (2) are/is determined therefrom, and control of the internal combustion engine is adapted correspondingly, **characterized**
- **in that** the evaluation takes place during a phase of steady-state operation of the internal combustion engine, and
- **in that** fuel detection is derived from the differently occurring I control component, by virtue of the fact that the I control component is compared with corresponding characteristic values stored in the control device (10).

2. Method according to Claim 1,
**characterized in that** the viscosities of the fuels are evaluated.

## Revendications

1. Procédé de fonctionnement d'un moteur à combustion interne qui fonctionne en alternance et/ou de manière additive avec un carburant à faible viscosité et un carburant visqueux, les deux carburants étant refoulés dans un accumulateur (2) par un dispositif de pompe à haute pression commun (1) et étant, à partir de cet accumulateur, introduits par le biais de soupapes d'injection (9) dans des chambres de travail du moteur à combustion interne, la commande du moteur à combustion interne et du dispositif d'injection étant effectuée par un dispositif électronique de commande (10), la quantité de carburant acheminée jusqu'à l'accumulateur (2) étant commandée par le biais d'un régulateur PID et différentes propriétés des carburants étant évaluées en utilisant le dispositif électronique de commande, à partir desquelles propriétés le carburant se trouvant dans l'accumulateur (2) et/ou le mélange de carburant se trouvant dans l'accumulateur (2) étant déterminés et la commande du moteur à combustion interne étant adaptée en conséquence, **caractérisé**
- **en ce que** l'évaluation s'effectue pendant une phase d'un fonctionnement stationnaire du moteur à combustion interne et
- **en ce qu'**une reconnaissance de carburant est déduite de la partie intégrale de la régulation s'établissant différemment, en comparant la partie intégrale de la régulation avec des valeurs caractéristiques correspondantes mises en mémoire dans le dispositif de commande (10).

2. Procédé selon la revendication 1,
**caractérisé en ce que** les viscosités des carburants sont évaluées.
